# EUROPÄISCHE PATENTSCHRIFT

(11) **EP 1 161 723 B1**
(45) Veröffentlichungstag und Bekanntmachung des Hinweises auf die Patenterteilung: **14.04.2004**
(21) Anmeldenummer: 00902615.4
(22) Anmeldetag: 19.01.2000
(51) Int. Cl.: G06F 9/44

(54) **VERFAHREN ZUR GRAFISCHEN DARSTELLUNG UND/ODER BEARBEITUNG VON WERTEN VON DATENTYPEN**
METHOD FOR THE GRAPHIC REPRESENTATION AND/OR PROCESSING OF VALUES OF DATA TYPES
PROCEDE DE REPRESENTATION GRAPHIQUE ET/OU DE TRAITEMENT DE VALEURS DE TYPES DE DONNEES

(30) Priorität: 11.02.1999 DE 19905630
(43) Veröffentlichungstag der Anmeldung: 12.12.2001
(73) Patentinhaber: Deutsche Telekom AG, 53113 Bonn (DE)
(72) Erfinder: DASSOW, Heiko, D-64347 Griesheim (DE); HARTMER, Ulrike, D-64289 Darmstadt (DE)
(86) Internationale Anmeldenummer: PCT/EP2000/000386
(87) Internationale Veröffentlichungsnummer: WO 2000/048072

(56) Entgegenhaltungen:
- EP-A- 0 606 788
- WANG C -H ET AL: "A LANGUAGE-BASED EDITING PROCESS FOR VISUAL OBJECT-ORIENTED PROGRAMMING" SOFTWARE ENGINEERING NOTES,US,ASSOCIATION FOR COMPUTING MACHINERY. NEW YORK, Bd. 23, Nr. 4, 1. Juli 1998 (1998-07-01), Seiten 70-75, XP000767770 ISSN: 0163-5948
- ROBSON R ET AL: "VISUAL EDITING OF DATA STRUCTURES" PROCEEDINGS OF THE CONFERENCE ON SOFTWARE MAINTENANCE. FROM 1994 INTERNATIONAL CONFERENCE ON SOFTWARE MAINTENANCE,US,LOS ALAMITOS, IEEE. COMP. SOC. PRESS, Bd. -, 15. Oktober 1991 (1991-10-15), Seiten 228-237, XP000315026 ISBN: 0-8186-2325-X
- MCAULIFFE D: "AN IMPLEMENTATION OF THE SCHEMATIC PSEUDOCODE APPROACH" COMPUTER,US,IEEE COMPUTER SOCIETY, LONG BEACH., CA, US, Bd. 22, Nr. 10, 1. Oktober 1989 (1989-10-01), Seite 73 XP000072737 ISSN: 0018-9162
- HOFMANN F.: 'Grafische Benutzungsoberflächen: Generierung aus OOA-Modellen', 1998, SPEKTRUM AKADEMISCHER VERLAG GMBH

## Beschreibung

Die Erfindung betrifft ein Verfahren zur grafischen Darstellung und/oder Bearbeitung von Werten von Datentypen einer formal definierten als Wertebaum vorliegenden Datenstruktur.

Das Dokument Hofmann, F.: "Grafische Benutzungs oberflächen: Generierung aus OOA-Modellen", 1998, Spektrum Akademischer Verlag GmbH, Seiten 40-43, 52-61 und 108-121, beschreibt die Generierung einer funktionsfähigen Benutzungsoberfläche aus einem Fachkonzept (OOA-Modell) mit Hilfe von Transformationsregeln, wobei mehrere vom Benutzer jeweils zu öffnende oder zu schließende Fenster entstehen.

Programmier- und Spezifikationssprachen benötigen eine formale Syntax zur Beschreibung von Datentypen und deren Werten. Es sind daher Möglichkeiten bekannt, Datenstrukturen in einer formalen Notation unabhängig von einer bestimmten Sprache zu definieren. Die gemäß einer dieser Möglichkeiten definierten Datentypen können im allgemeinen beliebig komplex sein und sich zum Teil dynamisch ändem. Eine übersichtliche Darstellung solcher Datentypen zur Anzeige oder zur Eingabe von Werten durch den Benutzer ist daher notwendig. Dies ist insbesondere für das Management von Kommunikationsnetzen erforderlich, da dort häufig sehr komplexe Datenstrukturen bearbeitet werden.

In den meisten Sprachen und Syntaxnotationen bestehen bereits Regeln für die textuelle Darstellung von Werten. So wird beispielsweise bei ASN.1-Datentypen gemäß ITU-T Empfehlung X.208 häufig eine wenig übersichtliche Darstellung des Wertes als Zeichenfolge vorgenommen.

Bei einer bekannten Form der Darstellung als Baum ist die Struktur des Datentypes besser zu erkennen. Eine solche Darstellung ist in der Firmen-Druckschrift IBM: "IBM TMN Development Platform", Piscata NJ, USA, 1998 beschrieben. Ein anderes bekanntes Verfahren umfaßt die Zuordnung des Wertes eines Attributs zu einer grafischen Komponente durch manuelles Erstellen von Regeln, beispielsweise die Bestimmung der Farbe des grafischen Objektes durch den Wert des Datentypes, wie es beispielsweise in der Firmen-Druckschrift Objective Systems Integrators: "NetExpert Framework Overview", Folsom, CA, USA, 1997 beschrieben ist.

Da beliebige Definitionen von Datentypen möglich sind, kostet es bei den bekannten Verfahren viel Zeit, für jeden neuen Datentyp ein eigenes grafisches Benutzeroberflächen-Fenster zu programmieren.

Aufgabe der vorliegenden Erfindung ist es, diesen Zeitaufwand zu ersparen und trotzdem zu einer übersichtlichen Darstellung zu gelangen, die eine Überprüfung und gegebenenfalls eine Bearbeitung der Datenstruktur ermöglicht.

Diese Aufgabe wird mit dem erfindungsgemäßen Verfahren dadurch gelöst,
- daß der Datenstruktur ein Fenster als grafische Benutzeroberfläche zugeordnet wird,
- daß in dem Fenster generische skalierbare grafische Benutzeroberflächen-Komponenten hierarchisch eingefügt werden, wobei der Wertebaum der Datenstruktur auf die Benutzeroberflächen-Komponenten abgebildet wird,
- daß die Relation der in dem Fenster eingefügten grafischen Benutzeroberflächen-Komponenten zu den zugehörigen Knoten des Wertebaums dargestellt wird und
- daß für jeden Teilbaum des Wertebaums eine grafische oder textuelle Darstellung des Wertes wählbar ist.

Die übersichtliche Darstellung eines komplexen Datentyps mit dem erfindungsgemäßen Verfahren erspart dem Benutzer langes Suchen nach Definitionen und hilft, Fehler bei der Eingabe von Werten für diesen Datentyp zu vermeiden. Dabei bietet die Erfindung die Möglichkeit, redundante Informationen zu verbergen und wichtige Informationen ausführlich darzustellen, da bei dem erfindungsgemäßen Verfahren jeder Benutzer die Möglichkeit hat zu entscheiden, welche Informationen angezeigt werden sollen und für welche Informationen eine kompakte Darstellung ausreicht. Insbesondere erlaubt das erfindungsgemäße Verfahren bei der Bearbeitung der Datentypen eine einfache Wertzuweisung.

Eine besonders einfache und sichere Wertzuweisung kann gemäß einer Weiterbildung der Erfindung dadurch erfolgen, daß für eine Bearbeitung des Wertebaums für jeden Knoten eine Liste aller Werte vorgehalten wird, die zuweisungskompatibel mit dem dargestellten Datentyp sind, und daß für eine Wertzuweisung jeweils ein Wert aus der Liste selektiert wird. Dabei kann zur Vermeidung von Eingabefehlern vorgesehen sein, daß bei der Erstellung von Wertelisten die Zahl der in die Liste zu übernehmenden Werte gemäß zuvor definierter Regeln entsprechend des aktuellen Kontextes eingeschränkt wird.

Eine andere Weiterbildung der Erfindung besteht darin, daß bei einer Initialisierung der grafischen Benutzeroberfläche zunächst eine Visualisierung des Fensters vorgenommen wird und danach Daten initialisiert werden, die zu einer Bearbeitung vorgehalten werden, insbesondere Wertelisten. Durch den damit verbundenen schnelleren Bildaufbau kann der Benutzer bereits einen Überblick über die Datenstruktur gewinnen, bevor alle zur Darstellung und zur Bearbeitung des Datentyps erforderlichen Daten initialisiert sind.

Ein Datentyp läßt sich auch dann grafisch darstellen, wenn keine zusätzlichen, als Metadaten bezeichneten Informationen über den Datentyp in der grafischen Oberflächen-Applikation verfügbar sind, wenn gemäß einer anderen Weiterbildung der Erfindung der darzustellende Wert in einer Transfersyntax übergeben wird, die sämtliche für die Darstellung notwendigen Informationen bezüglich des Datentyps und der Wertbelegung enthält.

Eine vorteilhafte Ausführungsform des erfindungsgemäßen Verfahrens besteht darin, daß Datentypen, deren exakte Typenzuordnung gemäß dem Prinzip der späten Bindung erst zur Laufzeit ermittelt werden kann, als dynamisch änderbarer Teilbaum in dem durch die grafische Benutzeroberfläche dargestellten Wertebaum eingefügt werden. Dies hat den Vorteil, daß bei diesen Datentypen die Darstellung der aktuellen Wertebelegung nicht erst das Öffnen von Unterfenstern erfordert, sondern direkt im Hauptfenster erfolgen kann.

Eine andere vorteilhafte Ausführungsform sieht vor, daß für Datentypen, deren exakte Typenzuordnung gemäß dem Prinzip der späten Bindung erst zur Laufzeit durch die Markierung eines anderen Knotens bestimmt wird (beispielsweise "ANY DEFINED BY" in der Spezifikationssprache ASN.1), der Benutzer zur Eingabe aufgefordert wird, ob die Zuordnung automatisch oder nach einer manuellen Eingabe erfolgen soll. Damit ist auch eine Zuordnung möglich, wenn die zur automatischen Zuordnung benötigten Informationen nicht verfügbar sind.

Gemäß einer anderen vorteilhaften Weiterbildung ist vorgesehen, daß durch Zwischenspeicherung und Anklicken des jeweiligen Teilbaums Werte von einem Teilbaum in einen anderen Teilbaum übertragbar sind. Dabei ist zwar eine Zuweisungs-Kompatibilität der den Teilbäumen zugeordneten Datentypen erforderlich. Die Datentypen müssen jedoch nicht innerhalb des gleichen Wertebaums instanziiert sein.

Eine einfache Benutzung zusammen mit anderen Programmen und das einfache Abbilden des allgemeinen Erscheinungsbildes ist gemäß einer anderen vorteilhaften Ausgestaltung dadurch möglich, daß das Verfahren durch ein oder mehrere in Anwenderprogramme einbindbare Programmodule realisiert wird.

Eine andere vorteilhafte Weiterbildung der Erfindung besteht darin, daß für jeden Knoten des Wertebaums, der durch den dargestellten Typ und die Relation zum übergeordneten Typ eindeutig benannt werden kann, zusätzliche anzuzeigende Informationen ablegbar sind. Dadurch können beispielsweise zusätzliche Textelemente für bestimmte Datentypen angezeigt werden, die zu einem beliebigen Zeitpunkt nach der Programmerstellung erzeugt werden und dynamisch zur Laufzeit in die Oberfläche eingebunden werden können.

Eine weitere Ausgestaltung der Erfindung besteht darin, daß während der Eingabe eines Wertes ständig geprüft wird, ob der eingegebene Wert für den zugehörigen Datentyp zulässig ist und ob der eingegebene Wert identisch mit dem derzeitig aktuellen Wert des Datentyps Ist, und daß das Ergebnis dem Benutzer kenntlich gemacht wird. Diese Ausgestaltung dient zu einer weiteren Erhöhung der Sicherheit und der Geschwindigkeit bei der Bearbeitung von Datentypen.

Femer kann die Anzeige und/oder die Bearbeitung dadurch erleichtert werden, daß bereits während der Eingabe eines Wertes das Darstellungsformat veränderbar ist und somit beispielsweise ein Zahlenwert entweder dezimal oder binär dargestellt wird, bevor eine Wertübemahme in den Wertebaum erfolgt.

Ausführungsbeispiele der Erfindung sind in der Zeichnung anhand mehrerer Figuren dargestellt und in der nachfolgenden Beschreibung näher erläutert. Es zeigt:
- Fig. 1: ein Fenster einer grafischen Benutzeroberfläche nach dem erfindungsgemäßen Verfahren,
- Fig. 2: ein Beispiel der formalen Datendefinition gemäß ASN.1 und
- Fig. 3: Prinzip einer generischen grafischen Darstellung.

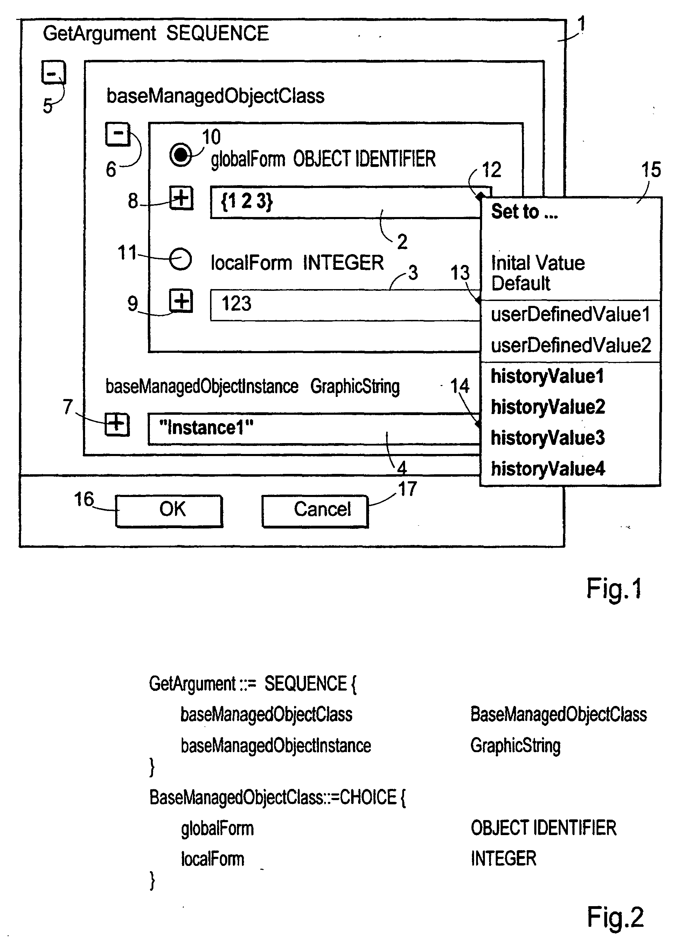

Fig. 2 zeigt in Form eines strukturierten Textes die Definitionen der Datentypen "GetArgument" und "BaseManagedObjectClass". Der Typ "GetArgument" enthält zwei Komponenten "baseManagedObjectClass" und "baseManagedObjectInstance", wobei links die Namen und rechts die Typen der Komponenten, nämlich "BaseManagedObjectClass" und "GraphicString", angegeben sind. Der Typ "BaseManagedObjectClass" ist eine CHOICE mit ebenfalls zwei Komponenten, nämlich "globalForm" vom Typ "OBJECTIDENTIFIER" und "IocalForm" vom Typ "INTEGER".

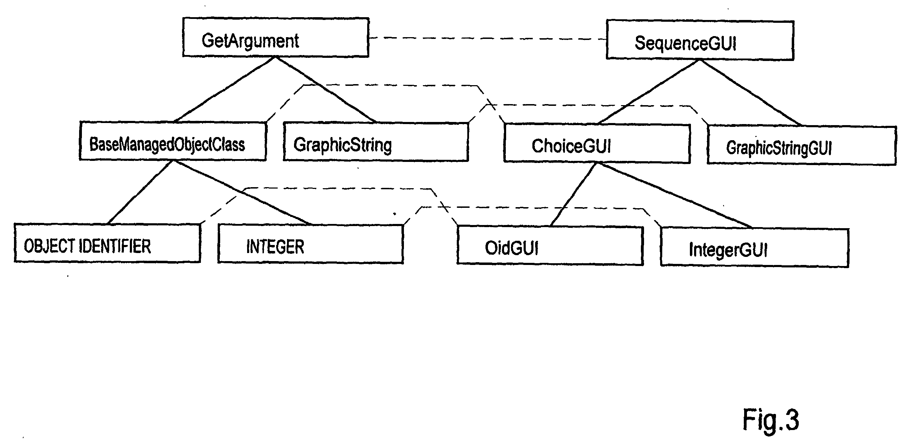

Fig. 3 zeigt das Prinzip einer generischen grafischen Darstellung der in Fig. 2 dargestellten formalen Datendefinition. Dabei ist links der Wertebaum dargestellt, während rechts die grafische Repräsentation angedeutet ist. Dabei und im folgenden Text wird für grafische Benutzeroberfläche auch die Abkürzung GUI (= Graphical User Interface) verwendet. Zwischen den Blöcken verlaufende durchgezogene Linien bedeuten, daß die darunterliegenden Elemente in dem darüberliegenden Knoten enthalten sind, während gestrichelte Linien andeuten, daß jeweils die grafische Repräsentation in Relation zu dem jeweiligen Datentyp steht.

Fig. 1 zeigt die entsprechende grafische Benutzeroberfläche mit einem Fenster 1, in welchem alle enthaltenen Datentypen als grafische Benutzeroberflächen-Komponenten enthalten sind. Die Wurzel des Wertebaums (Fig. 3) ist mit GetArgument SEQUENCE angegeben. Die Eingabebalken 2, 3 und 4 mit den Etiketten "globalForm", "IocalForm" und "baseManagedObjectlnstance" entsprechen den Blättern des Werte- bzw. GUI-Baumes. Mit Schaltflächen (Buttons) 5 bis 9 kann für jeden Knoten und jedes Blatt zwischen einer textuellen Darstellung (minus) und einer grafischen Darstellung (plus) gewählt werden.

Mit weiteren Schaltflächen 10, 11 (Radio Buttons) kann zwischen zwei alternativ zu bearbeitenden Datentypen (in diesem Fall Blätter) gewählt werden. Die Eingabebalken 2, 3, 4 sind jeweils mit einer Schaltfläche 12, 13, 14 versehen, mit weicher ein Fenster 15 zur Auswahl von als Konstanten abgelegten Werten geöffnet werden kann.

Die grafische Benutzeroberfläche weist femer Schaltflächen 16, 17 zum Abschluß der Bearbeitung und Speicherung der bearbeiteten Daten sowie zum Verlassen der grafischen Benutzeroberfläche ohne Abspeicherung auf.

## Patentansprüche

1. Verfahren zur grafischen Darstellung von Werten von Datentypen einer formal definierten als Wertebaum vorliegenden Datenstruktur, **dadurch gekennzeichnet,**
- **daß** der Datenstruktur ein Fenster (15) als grafische Benutzeroberfläche zugeordnet wird,
- **daß** in dem Fenster generische skalierbare grafische Benutzeroberflächen-Komponenten hierarchisch eingefügt werden, wobei der Wertebaum der Datenstruktur auf die Benutzerpberftächen-Komponenten abgebildet wird,
- **daß** die Relation der in dem Fenster eingefügten grafischen Benutzeroberflächen-Komponenten zu den zugehörigen Knoten (2, 3, 4) des Wertebaums dargestellt wird (12, 13, 14) und
- **daß** für jeden Teilbaum des Wertebaums eine grafische oder textuelle Darstellung des Wertes wählbar ist (5, 6, 7, 8, 9).

2. Verfahren nach Anspruch 1, **dadurch gekennzeichnet, daß** für eine Bearbeitung des Wertebaums für jeden Knoten eine Liste aller Werte vorgehalten wird, die zuweisungskompatibel mit dem dargestellten Datentyp sind, und daß für eine Wertzuweisung jeweils ein Wert aus der Liste selektiert wird.

3. Verfahren nach Anspruch 2, **dadurch gekennzeichnet, daß** bei der Erstellung von Wertelisten die Zahl der in die Liste zu übernehmenden Werte gemäß zuvor definierter Regeln entsprechend des aktuellen Kontextes eingeschränkt wird.

4. Verfahren nach einem der vorhergehenden Ansprüche, **dadurch gekennzeichnet, daß** bei einer Initialisierung der grafischen Benutzeroberfläche zunächst eine Visualisierung des Fensters vorgenommen wird und danach Daten initialisiert werden, die zu einer Bearbeitung vorgehalten werden, insbesondere Wertelisten.

5. Verfahren nach einem der vorhergehenden Ansprüche, **dadurch gekennzeichnet, daß** der darzustellende Wert in einer Transfersyntax übergeben wird, die sämtliche für die Darstellung notwendigen Informationen bezüglich des Datentyps und der Wertbelegung enthält.

6. Verfahren nach einem der vorhergehenden Ansprüche, **dadurch gekennzeichnet, daß** Datentypen, deren exakte Typenzuordnung gemäß dem Prinzip der späten Bindung erst zur Laufzeit ermittelt werden kann, als dynamisch änderbarer Teilbaum in dem durch die grafische Benutzeroberfläche dargestellten Wertebaum eingefügt werden.

7. Verfahren nach einem der vorhergehenden Ansprüche, **dadurch gekennzeichnet, daß** für Datentypen, deren exakte Typenzuordnung gemäß dem Prinzip der späten Bindung erst zur Laufzeit durch die Markierung eines anderen Knotens bestimmt wird, beispielsweise "ANY DEFINED BY" in der Spezifikationssprache ASN.1, der Benutzer zur Eingabe aufgefordert wird, ob die Zuordnung automatisch oder nach einer manuellen Eingabe erfolgen soll.

8. Verfahren nach einem der vorhergehenden Ansprüche, **dadurch gekennzeichnet, daß** durch Zwischenspeicherung und Anklicken des jeweiligen Teilbaums Werte von einem Teilbaum in einen anderen Teilbaum übertragbar sind.

9. Verfahren nach einem der vorhergehenden Ansprüche, **dadurch gekennzeichnet, daß** das Verfahren durch ein oder mehrere in Anwenderprogramme einbindbare Programmodule realisiert wird.

10. Verfahren nach einem der vorhergehenden Ansprüche, **dadurch gekennzeichnet, daß** für jeden Knoten des Wertebaums, der durch den dargestellten Typ und die Relation zum übergeordneten Typ eindeutig benannt werden kann, zusätzliche anzeigende Informationen ablegbar sind.

11. Verfahren nach einem der vorhergehenden Ansprüche, **dadurch gekennzeichnet, daß** während der Eingabe eines Wertes ständig geprüft wird, ob der eingegebene Wert für den zugehörigen Datentyp zulässig ist und ob der eingegebene Wert identisch mit dem derzeitig aktuellen Wert des Datentyps ist, und daß das Ergebnis dem Benutzer kenntlich gemacht wird.

12. Verfahren nach einem der vorhergehenden Ansprüche, **dadurch gekennzeichnet, daß** bereits während der Eingabe eines Wertes das Darstellungsformat veränderbar ist und somit beispielsweise ein Zahlenwert entweder dezimal oder binär dargestellt wird, bevor eine Wertübernahme in den Wertebaum erfolgt.

## Claims

1. Method for the graphical display of values of data types of a formally defined data structure existing in the form of a value tree, **characterized in that**
- the data structure is associated with a window (15) as graphical user interface;
- generic scalable graphical user interface components are hierarchically inserted in the window, the value tree of the data structure being mapped to the user interface components;
- the relationship between the graphical user interface components inserted in the window and the corresponding nodes (2, 3, 4) of the value tree is displayed (12, 13, 14); and
- a graphical or textual display of the value is selectable for each subtree of the value tree (5, 6, 7, 8, 9).

2. Method according to claim 1, **characterized in that**, for the processing of the value tree, a list is held available for each node of all those values which are allocation-compatible with the displayed data type, and **in that**, for each allocation of a value, a value is selected from the list.

3. Method according to claim 2, **characterized in that**, when value lists are being produced, the number of values to be included in the list is limited in accordance with previously defined rules according to the current context.

4. Method according to any one of the preceding claims, **characterized in that**, when the graphical user interface is being initialized, first the window is visualized and then those data are initialized which are held available for processing, particularly value lists.

5. Method according to any one of the preceding claims, **characterized in that** the value to be displayed is transferred in a transfer syntax containing all the information required for display with regard to data type and value assignment.

6. Method according to any one of the preceding claims, **characterized in that** data types whose precise type allocation can be determined only at the runtime according to the principle of late binding are inserted as a dynamically changeable subtree in the value tree displayed by the graphical user interface.

7. Method according to any one of the preceding claims, **characterized in that**, for data types whose precise type allocation is determined only at the runtime according to the principle of late binding through the marking of another node, such as "ANY DEFINED BY" in the specification language ASN.1, the user is requested to input whether allocation is to be performed automatically or after a manual input.

8. Method according to any one of the preceding claims, **characterized in that** values can be transferred from one subtree to another subtree by placing in temporary storage and clicking on the respective subtree.

9. Method according to any one of the preceding claims, **characterized in that** the method is implemented by one or more program modules which can be integrated into user programs.

10. Method according to any one of the preceding claims, **characterized in that** additional display information can be stored for each node of the value tree which can be unambiguously identified by the displayed type and the relationship with the higher-ranking type.

11. Method according to any one of the preceding claims, **characterized in that**, while a value is being inputted, it is constantly checked whether the inputted value is allowable for the corresponding data type and whether the inputted value is identical with the current value of the data type, and **in that** the result is made recognizable to the user.

12. Method according to any one of the preceding claims, **characterized in that**, already while a value is being inputted, the display format is changeable and, therefore, a numerical value, for example, is displayed in either decimal or binary form before a value is transferred to the value tree.

## Revendications

1. Procédé de représentation graphique de valeurs de types de données d'une structure de données existante définie formellement comme arbre de valeurs, **caractérisé en ce que**
- la structure de données se voit attribuer une fenêtre (15) comme surface utilisateur graphique,
- des composantes de surface utilisateur graphique évolutives et génériques sont insérées dans la fenêtre, l'arbre de valeurs de la structure de données étant reproduit sur les composantes de la surface utilisateur
- la relation entre les composantes de surface utilisateur graphique insérées dans la fenêtre et les noeuds correspondants (2, 3, 4) de l'arbre de valeurs est représentée (12, 13, 14) et
- pour chaque arbre partiel de l'arbre de valeurs, il est possible de choisir entre une représentation graphique ou textuelle de la valeur (5, 6, 7, 8, 9).

2. Procédé selon la revendication 1, **caractérisé en ce que**, pour le traitement de l'arbre de valeurs, est dressée pour chaque noeud une liste de toutes les valeurs présentant une compatibilité d'attribution avec le type de données représenté et **en ce que** pour chaque attribution de valeur, une valeur est sélectionnée dans la liste.

3. Procédé selon la revendication 2, **caractérisé en ce que**, lors de l'établissement des listes de valeurs, le nombre des valeurs à introduire dans la liste est limité selon des règles préalablement définies en fonction du contexte correspondant.

4. Procédé selon l'une des revendications précédentes, **caractérisé en ce que**, lors de l'initialisation de la surface utilisateur graphique, il est tout d'abord procédé à une visualisation de la fenêtre, des données étant ensuite initialisées pour être destinées à un traitement ultérieur, notamment sous forme de listes de valeurs.

5. Procédé selon l'une des revendications précédentes, **caractérisé en ce que** la valeur à représenter est remise en une syntaxe de transfert qui contient toutes les informations nécessaires à la représentation en ce qui concerne le type de données et l'attribution de valeur.

6. Procédé selon l'une des revendications précédentes, **caractérisé en ce que** les types de données dont l'attribution exacte à un type ne peut, selon le principe du liage tardif, être déterminée que pendant la durée du traitement sont insérés comme arbre partiel dynamiquement modifiable dans l'arbre de valeurs représenté par la surface utilisateur graphique.

7. Procédé selon l'une des revendications précédentes, **caractérisé en ce que**, pour les types de données dont l'attribution exacte à un type n'est, selon le principe du liage tardif, déterminée que pendant la durée du traitement, par marquage d'un autre noeud, par exemple « ANY DEFINED BY » dans le langage de spécification ASN.1, l'utilisateur est invité à préciser si l'attribution doit se faire automatiquement ou par intervention manuelle.

8. Procédé selon l'une des revendications précédentes, **caractérisé en ce que** des valeurs peuvent être transférées d'un arbre partiel sur un autre arbre partiel par mémorisation intermédiaire et sélection de l'arbre partiel correspondant.

9. Procédé selon l'une des revendications précédentes, **caractérisé en ce que** le procédé est réalisé par un ou plusieurs modules de programmes pouvant être intégrés dans des programmes d'applications.

10. Procédé selon l'une des revendications précédentes, **caractérisé en ce que** des informations supplémentaires d'affichage peuvent être archivées pour chaque noeud de l'arbre de valeurs pouvant être désigné sans ambiguïté par le type représenté et par sa relation avec le type immédiatement supérieur.

11. Procédé selon l'une des revendications précédentes, **caractérisé en ce qu'**il est constamment vérifié, lors de l'introduction d'une valeur, si la valeur introduite est admise pour le type de données correspondant et si la valeur introduite est identique avec la valeur actuelle du type de données, et **en ce que** le résultat est porté à la connaissance de l'utilisateur.

12. Procédé selon l'une des revendications précédentes, **caractérisé en ce que** le format de présentation peut déjà être modifié pendant l'introduction d'une valeur, ce qui permet par exemple de représenter une valeur chiffrée soit sous forme décimale, soit sous forme binaire avant que la valeur soit insérée dans l'arbre de valeurs.
